(19) Europäisches Patentamt
European Patent Office
Office européen des brevets

(11) EP 3 775 137 B1

(12) # EUROPEAN PATENT SPECIFICATION

(45) Date of publication and mention of the grant of the patent:
**08.04.2026 Bulletin 2026/15**

(21) Application number: **19739294.7**

(22) Date of filing: **16.07.2019**

(51) International Patent Classification (IPC):
***C11D 3/40*** *(2006.01)* ***C11D 11/00*** *(2006.01)*
***C09B 33/16*** *(2006.01)*

(52) Cooperative Patent Classification (CPC):
**C11D 3/40; C09B 33/16;** C11D 2111/12

(86) International application number:
**PCT/EP2019/069099**

(87) International publication number:
**WO 2020/020703 (30.01.2020 Gazette 2020/05)**

(54) **LAUNDRY DETERGENT**

WÄSCHEWASCHMITTEL

DÉTERGENT POUR LESSIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.07.2018 EP 18186024**

(43) Date of publication of application:
**17.02.2021 Bulletin 2021/07**

(73) Proprietors:
- **Unilever Global IP Limited**
  **Wirral, Merseyside CH62 4ZD (GB)**
  Designated Contracting States:
  **CY DE GB IE IT MT**
- **Unilever IP Holdings B.V.**
  **6708 WH Wageningen (NL)**
  Designated Contracting States:
  **AL AT BE BG CH CZ DK EE ES FI FR GR HR HU IS LI LT LU LV MC MK NL NO PL PT RO RS SE SI SK SM TR**

(72) Inventors:
- **BATCHELOR, Stephen, Norman**
  **Wirral Merseyside CH63 3JW (GB)**
- **BURNHAM, Neil, Stephen**
  **Wirral Merseyside CH63 3JW (GB)**

(74) Representative: **Unilever Patent Group**
**Bronland 14**
**6708 WH Wageningen (NL)**

(56) References cited:
**EP-B1- 2 992 054**
**WO-A1-2013/169536**
**WO-A1-2013/169828**
**US-A1- 2015 000 048**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 775 137 B1

## Description

### Field of the invention

The present invention relates to laundry detergent compositions that comprise a blue or violet bis-azo shading dye. The invention further relates to a domestic method of treating a textile using a blue or violet bis-azo shading dye and to the blue or violet bis-azo shading dye as such.

### Background of the invention

There is a need to maintain the white appearance of textiles such that the aesthetic value is retained as long as possible. Many textiles are white but over the lifetime of these textiles the whiteness fades or yellows reducing the aesthetic value of the textile. To counteract this laundry detergent manufacturers may incorporate shading dyes into their products. The purpose of the shading dye is typically to counteract the fading or yellowing of white textiles by providing a blue-violet hue to the laundered fabrics. The shading dye needs to be able to deposit from the wash liquor, typically comprising surfactants, onto the textile during a domestic laundry process.

Poly-alkoxylated blue or violet bis-azo shading dyes are blue or violet dyes that deposit to textiles from the wash to provide a blue or violet tint, which enhances textile whiteness. Poly-alkoxylated bis-azo dyes are dyes which contain 2 azo groups in their structure and a polyalkoxy group. The azo groups may be in the azo or hydrazone tautomeric form.

Poly-alkoxylated blue or violet shading dyes are discussed in WO 2011/098356 (Unilever) and WO2012/054835 (Procter and Gamble). EP2992054 discusses poly-alkoxylated bis-azo shading dyes which can shade textiles during a domestic laundry wash. WO 2013/169828 and WO 2013/169536 disclose detergent particles comprising polyalkoxylated bis-azo shading dyes.

It is an object of the present invention to provide a laundry detergent composition comprising poly-alkoxylated bis-azo shading dyes which have improved deposition on cellulosic fibre- and/or nylon fibre-based textiles. Cellulosic fibres include cotton, Tencel, viscose and linen. Nylon fibres include Nylon 6 and nylon 6,6.

### Summary of the invention

In a first aspect the present invention provides a laundry detergent composition comprising:

(i) from 2 to 70 wt. % of a surfactant; and
(ii) from 0.00001 to 0.1 wt. %, preferably from 0.00005 to 0.001 wt. %, more preferably from 0.0001 to 0.005 wt. % of a poly-alkoxylated blue or violet bis-azo dye comprising at least one polyalkoxy group which is end-terminated by a -COOH group, as defined in claim 1.

The following benefits can be afforded by use of the poly-alkoxylated blue or violet bis-azo dye according to the invention:

- improved the deposition onto cellulosic fibres and textiles based thereon; and/or
- improved the deposition onto nylon fibres and textiles based thereon; and/or
- a more balanced deposition on cellulosic and nylon fibres if both are present in the wash load; and/or
- a targeted deposition onto cellulosic and/or nylon fibres versus polyester fibres. The latter can be advantageous when washing mixed loads of e.g. white nylon-based textiles with red polyester-based textiles.

These effects may be compared to use of a poly-alkoxylated blue or violet bis-azo dye of similar structure, but which lacks an polyalkoxy group end-terminated according to the invention, and is for example (and in particular) end-terminated by -H or a -methyl group.

In a second aspect the present invention provides a domestic method of treating a textile, the method comprising the steps of:

a. treating a textile with an aqueous solution of 0.5 to 20 g/L, more preferably 1 to 10g/L of the laundry detergent composition according to the first aspect of the invention;
b. preferably rinsing and drying the textile.

In a further aspect the invention relates to a poly-alkoxylated blue or violet bis-azo dye comprising at least one polyalkoxy group which is end-terminated by a -COOH group, according to claim 13.

## Detailed description of the invention

Definitions

Weight percentage (wt. %) is based on the total weight of the laundry detergent composition, unless otherwise indicated. It will be appreciated that the total weight amount of ingredients will not exceed 100 wt. %. Whenever an amount or concentration of a component is quantified herein, unless indicated otherwise, the quantified amount or quantified concentration relates to said component per se, even though it may be common practice to add such a component in the form of a solution or of a blend with one or more other ingredients. It is furthermore to be understood that the verb "to comprise" and its conjugations is used in its non-limiting sense to mean that items following the word are included, but items not specifically mentioned are not excluded. Finally, reference to an element by the indefinite article "a" or "an" does not exclude the possibility that more than one of the elements is present, unless the context clearly requires that there be one and only one of the elements. The indefinite article "a" or "an" thus usually means "at least one". Unless otherwise specified all measurements are taken at standard conditions. Whenever a parameter, such as a concentration or a ratio, is said to be less than a certain upper limit it should be understood that in the absence of a specified lower limit the lower limit for said parameter is 0.

Where organic compounds contain charged groups such as sulphonate or carboxy groups, weights refer to the protonated form, i.e. $SO_3H$ and COOH.

The dyes used in the present invention are blue or violet. In this regard the dye gives a blue or violet color to a white cloth with a hue angle of 240 to 330, more preferably 260 to 320, most preferably 265 to 300. The white cloth used is bleached non-mercerised woven cotton sheeting. Preferably a 10 cm by 10 cm piece of white bleached non-mercerised woven cotton cloth is agitated in an aqueous solution (6° French Hard water, liquor 298K: cloth 30:1) 2g/L of a base detergent (15 wt. % linear alkyl benzene sulfonate, 23 wt. % sodium carbonate, 42 wt. % sodium sulfate, 2 wt. % dolomite, 10wt% calcite, remainder minors and moisture) for 30 minutes at room temperature. The cloths are removed rinsed and tumble dried. The experiment is repeated with and without the addition of shading dye. The color of the cloth is measured using a reflectometer and expressed as the CIE L*a*b* values.

The total color added to the cloth was calculated as the ΔE value, such that

$$\Delta E = (\Delta L^2 + \Delta a^2 + \Delta b^2)^{0.5}$$

where ΔL = L(control)-L(dye); Δa = a(control)-a(dye); Δb = b(control)-b(dye)

The actual color of the cloth was calculated as the hue angle, which for the current range of colors is given by

$$\text{Hue angle} = 270 + 180/\pi \times \text{atan}(-\Delta a/\Delta b)$$

A hue angle of 360/0 is red, 270 is blue and 180 is green.

The dye according to the invention is a shading dye which means it is able to deposit onto textile during domestic wash conditions in the presence of a wash liquor comprising surfactant. This may be assessed using the above test, where a shading dye will give a non-zero ΔE value.

The one or more polyalkoxy groups comprised by the dye according to the invention contains a mole average of 2 to 20 alkoxy units. The dye of the invention comprises one or two polyalkoxy groups which is end-terminated by a -COOH group, more preferably the dye comprises one polyalkoxy group which is end-terminated by a -COOH.

The poly-alkoxylated blue or violet bis-azo dye is an ethoxylated dye of the form:

*BAC* $-O-(CH_2CH_2O)_nCH_2COOH$

Wherein BAC comprises the bis-azo chromophore structure and n is from 2 to 20, more preferably from 3 to 10, even more preferably from 4 to 8. The number n is the mole average number of ethoxy groups.

Preferably one of the azo groups is in the hydrazone form, and one in the azo form when dissolved in water. Azo-hydrazone tautomerism is discussed in Organic Chemistry in Colour by P.F. Gordon and P. Gregory (Springer-Verlag 1983). Azo and hydrazone forms are illustrated below for the dye Direct Violet 9:

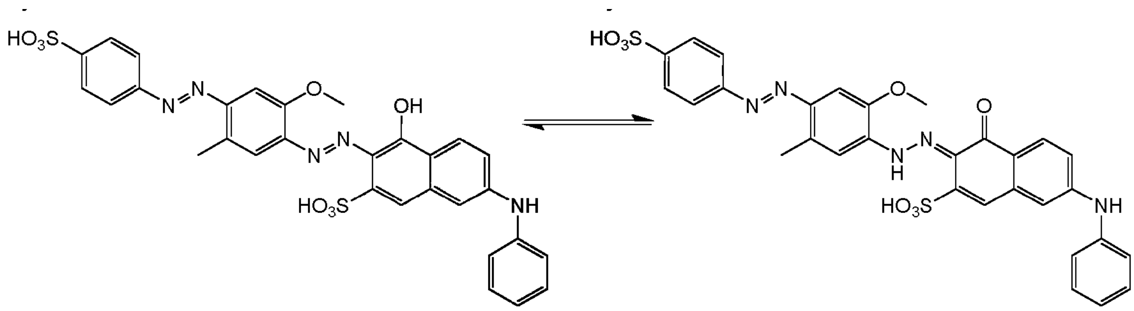

Azo Hydrazone

The structures (I) to (V) below describe bis-azo dyes structures wherein one of the azo groups is depicted in the hydrazone form. These structures are to be interpreted as also covering the bis-azo dyes wherein both azo groups are in the -N=N- from. The poly-alkoxylated blue or violet bis-azo dye of the invention may be present as the salt of an alkali metal, alkaline earth metal or a quaternary amine most preferably the counterion is the sodium salt. The structures (I) to (V) below are also to be interpreted as covering such salt forms and the free-acid forms.

The poly-alkoxylated blue or violet bis-azo dye comprises the following general structure (I):

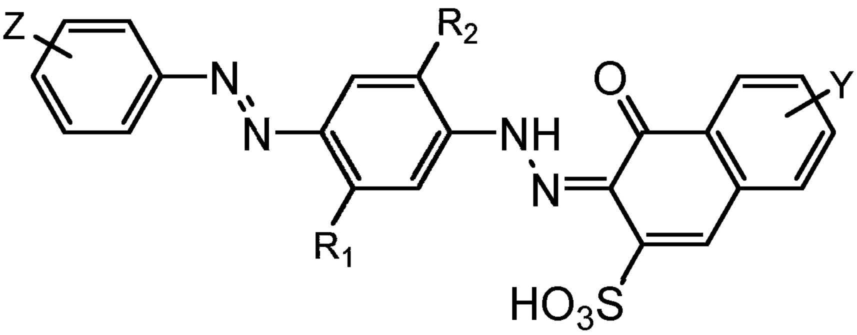

(I)

wherein:

$R_1$ and $R_2$ are independently H, alkyl, alkoxy, alkyleneoxy, alkyl capped alkyleneoxy, polyalkyleneoxy, alkyl capped polyalkyleneoxy, urea, amido or acetamido;

Z is an oxygen, nitrogen or sulfonamido group further substituted with a substituted or unsubstituted amino, or a substituted or unsubstituted sulfonamido group, wherein the substituents are selected from the group consisting of alkyl, alkyleneoxy, polyalkyleneoxy, or phenyl moieties wherein the phenyl group may be further substituted with alkyl, alkyleneoxy or polyalkyleneoxy moieties.

Y is a substituted or unsubstituted amino group.

In a more preferred aspect, $R_1$ and $R_2$ are independently selected from the group consisting of alkyl or alkoxy.

In a more preferred aspect, Z is a phenyl group wherein the phenyl group may be further substituted with alkyl, alkyleneoxy, polyalkyleneoxy moieties, even more preferably Z is a substituted group comprising a sulfonamide moiety.

In view of structure (I), the at least one polyalkoxy group which is end-terminated by a -COOH may be part of any of the substituents $R_1$, $R_2$, Z and Y but preferably is part of the Z-substituent.

More advantageously the BAC group comprises the following structure (II):

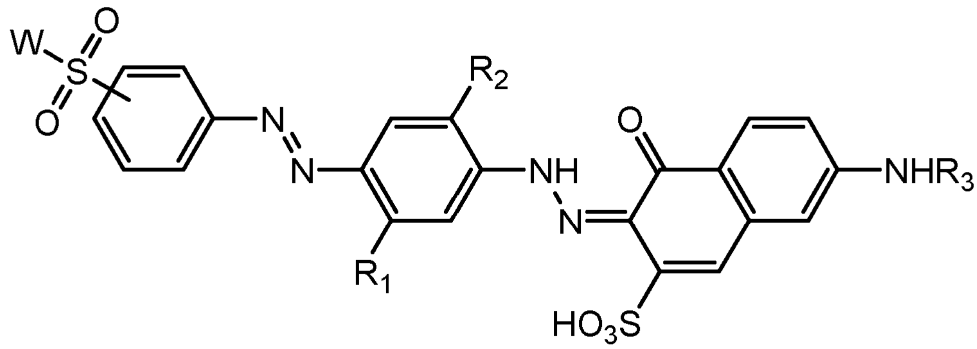

(II)

wherein:

$R_1$ and $R_2$ are independently alkyl or alkoxy, preferably methyl and methoxy;
W is a substituent amino moiety;
$R_3$ is a hydrogen, alkyl or aryl group, preferably a phenyl group.

In view of structure (II), the at least one polyalkoxy group which is end-terminated by a -COOH may be part of any of the substituents $R_1$, $R_2$, and W but preferably is part of the W-substituent.

Advantageously W is an amino-polyalkoxy group or an amino-phenyl-polyalkoxy group, wherein the polyalkoxy group is end-terminated by -COOH.

As such highly preferred are the poly-alkoxylated blue or violet bis-azo dyes of the following structures:

(III)

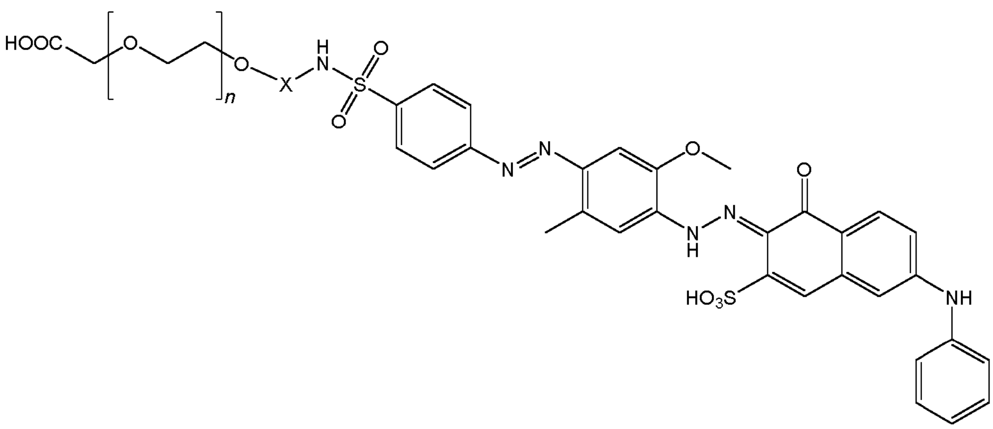

wherein X is an alkyl group or a mono or poly propoxy group and wherein n is from 2 to 20;

or of the structure (IV):

(IV)

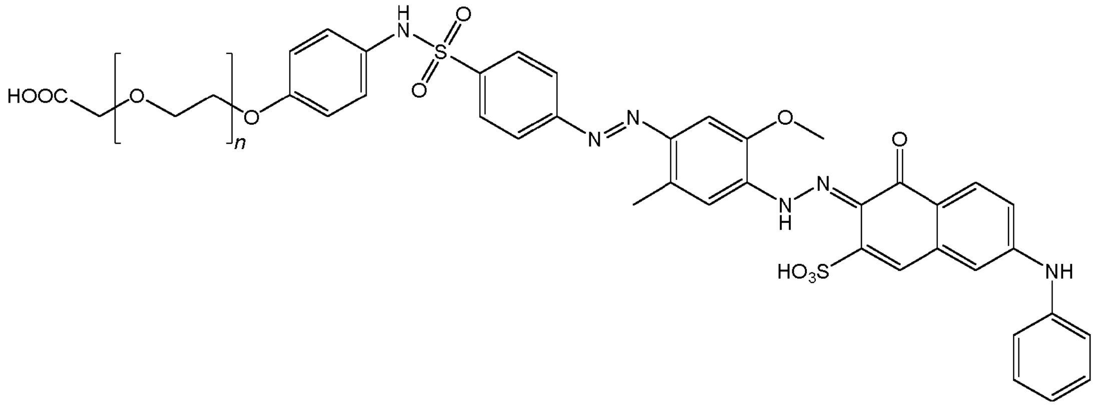

wherein n is from 2 to 20;

or of the structure (V):

(V)

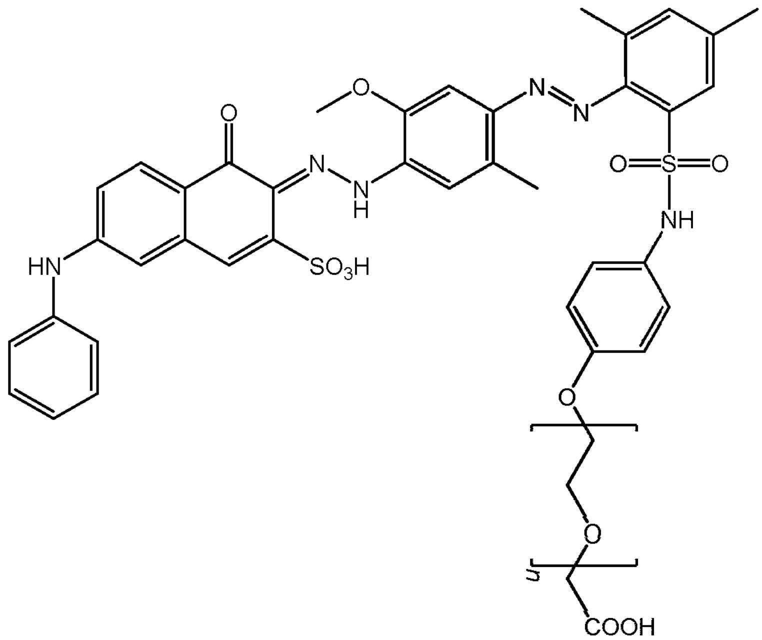

wherein n is from 2 to 20.

The n in the structures III, IV and V is preferably from 3 to 10 and more preferably from 4 to 8. Of the structures III, IV and V, the dye of structure IV is the most preferred.

In general, it is preferred that the at least one polyalkoxy group is a linear polyalkoxy group which is end-terminated by a $-OCH_2COOH$ group. Even more advantageously the linear polyalkoxy group is not further substituted.

**Manufacture of the blue or violet bis azo dyes**

The bis-azo dyes may be synthesised via well-known azo coupling reactions, for example

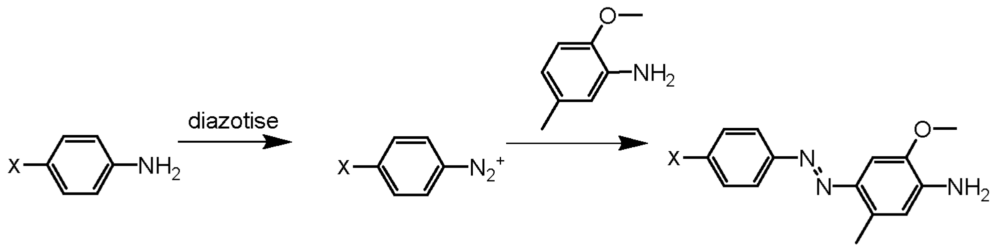


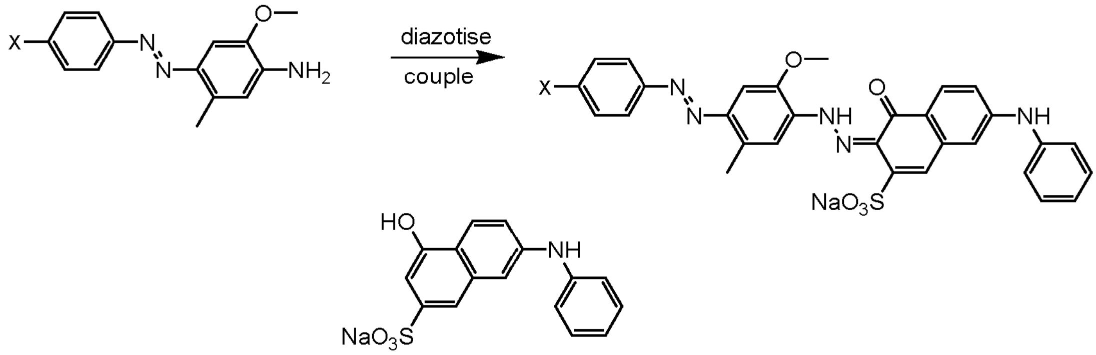


where

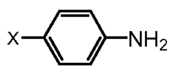

is

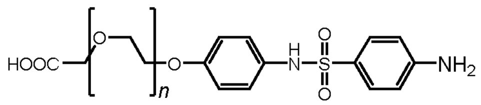

The -COOH or $-CH_2COOH$ group may be added to the end of a polyalkoxy chain via a direct alkylation reaction with $Z-CH_2COOR$, where Z is a chlorine, bromine or iodine and R is H or alkyl, where R is alkyl, the alkyl group is removed by hydrolysis to form the product. Alternatively, via a rhodium(II)-catalysed mono-coupling with tertbutyl diazoacetate, for example:

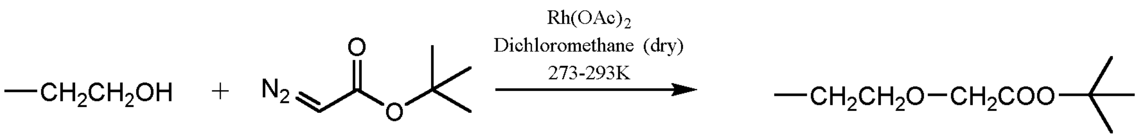


The tertbutyl group may be removed by simple hydrolysis under acid conditions.

Synthesis of a plurality of bis-azo dyes having at least one polyalkoxy chain, which are not end-terminated by a -COOH group are described in WO2012/054058. The end-terminating -COOH group may be added to the polyalkoxy chain using the methods above. Such reactions are well-known for example in the preparation of alkyl ether carboxylate surfactants.

## Surfactant

The laundry detergent composition of the invention comprises from 2 to 70 wt. % of a surfactant, most preferably 10 to 30 wt. %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the

surfactants used are saturated.

Suitable nonionic surfactants may include, in particular, the reaction products of compounds having a hydrophobic group and a reactive hydrogen atom, for example, aliphatic alcohols, acids, amides with alkylene oxides, especially ethylene oxide either alone or with propylene oxide. Specific nonionic surfactants are the condensation products of aliphatic $C_8$ to $C_{18}$ primary or secondary linear or branched alcohols with ethylene oxide, generally 5 to 40 EO, preferably 7EO to 9EO.

Suitable anionic surfactants which may be used are usually water-soluble alkali metal salts of organic sulfates and sulphonates having alkyl radicals containing from about 8 to about 22 carbon atoms, the term alkyl being used to include the alkyl portion of higher acyl radicals. Examples of suitable synthetic anionic surfactants are sodium and potassium alkyl sulfates, especially those obtained by sulphating higher $C_8$ to $C_{18}$ alcohols, produced for example from tallow or coconut oil, sodium and potassium alkyl $C_9$ to $C_{20}$ benzene sulphonates, particularly sodium linear secondary alkyl $C_{10}$ to $C_{15}$ benzene sulphonates; and sodium alkyl glyceryl ether sulfates, especially those ethers of the higher alcohols derived from tallow or coconut oil and synthetic alcohols derived from petroleum. The preferred anionic surfactants are sodium $C_{11}$ to $C_{15}$ alkyl benzene sulphonates and sodium $C_{12}$ to $C_{18}$ alkyl sulfates. Highly preferred are anionic alkyl benzene sulfonates, which more advantageously are linear alkyl benzene sulphonates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic and nonionic surfactants, in particular the groups and examples of anionic and nonionic surfactants pointed out in EP-A-346 995 (Unilever). Especially preferred is surfactant system that is a mixture of an alkali metal salt of a $C_{16}$ to $C_{18}$ primary alcohol sulfate together with a $C_{12}$ to $C_{15}$ primary alcohol 3 to 7 EO ethoxylate.

The nonionic surfactant is preferably present in amounts of less than 50 wt. %, most preferably of less than 20 wt. % based on the total weight of the surfactant system. Anionic surfactants can be present for example in amounts in the range from 50 to 100 wt. % based on the total weight of the surfactant system. Thus a highly advantageous surfactant comprises 50 to 100 wt. % of linear alkyl benzene sulfonates, based on the total weight of surfactants.

**Builders or Complexing Agents**

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetra-acetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The laundry detergent composition of the invention may also contain 0-65 wt. % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilizing agents by virtue of their ability to complex metal ions.

Zeolite and carbonate (carbonate (including bicarbonate and sesquicarbonate) are preferred builders, whereof carbonate is the more preferred.

The composition may contain as builder a crystalline aluminosilicate, preferably an alkali metal aluminosilicate, more preferably a sodium aluminosilicate. This is typically present at a level of less than 15 wt. %. Aluminosilicates are materials having the general formula:

$$0.8\text{-}1.5\ M_2O.\ Al_2O_3.\ 0.8\text{-}6\ SiO_2$$

where M is a monovalent cation, preferably sodium. These materials contain some bound water and are required to have a calcium ion exchange capacity of at least 50 mg CaO/g. The preferred sodium aluminosilicates contain 1.5-3.5 $SiO_2$ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt. % of phosphate. Preferably the laundry detergent formulation is carbonate built.

## Fluorescent Agent

The laundry detergent composition of the invention preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the laundry detergent composition of the invention is generally from 0.005 to 2 wt. %, more preferably 0.01 to 0.1 wt. %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

It is preferred that the laundry detergent composition according to the invention comprises a fluorescer. Likewise, it is preferred that the aqueous solution used in the domestic method of treating a textile comprises a fluorescer. When a fluorescer is present in said aqueous solution, it is preferably in the range from 0.0001 g/l to 0.1 g/l, preferably 0.001 to 0.02 g/l.

The laundry detergent composition may comprise a mixture of different shading dyes. For example, poly-alkoxylated blue or violet bis-azo dye comprising at least one polyalkoxy group which is end-terminated by a -COOH group and poly-alkoxylated blue or violet bis-azo dye comprising at least one polyalkoxy group which is end-terminated by an H atom. Even further shading dyes or dyes may be present.

## Perfume

Preferably the laundry detergent composition comprises a perfume. The perfume is preferably in the range from 0.001 to 3 wt. %, most preferably 0.1 to 1 wt. %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a laundry formulation. In the laundry detergent compositions of the present invention it is envisaged that there will be four or more, preferably five or more, more preferably six or more or even seven or more different perfume components.

In perfume mixtures preferably 15 to 25 wt. % are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol. Perfume and top note are advantageously used to cue the whiteness benefit provided by the laundry detergent composition of the invention.

It is preferred that the laundry detergent composition of the invention does not contain a peroxygen bleach, e.g., sodium percarbonate, sodium perborate, and peracid.

## Polymers

The laundry detergent composition of the invention may comprise one or more further polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

## Enzymes

One or more enzymes are preferably present in a laundry detergent composition of the invention and when practicing the method of the invention.

Preferably the level of each enzyme in the laundry detergent composition of the invention is from 0.0001 wt. % to 0.1 wt. % protein.

Especially contemplated enzymes include proteases, alpha-amylases, cellulases, lipases, peroxidases/oxidases, pectate lyases, and mannanases, or mixtures thereof.

Suitable lipases include those of bacterial or fungal origin. Chemically modified or protein engineered mutants are included. Examples of useful lipases include lipases from *Humicola* (synonym *Thermomyces*), e.g. from *H. lanuginosa* (*T. lanuginosus*) as described in EP 258 068 and EP 305 216 or from *H. insolens* as described in WO 96/13580, a *Pseudomonas* lipase, e.g. from *P. alcaligenes* or *P. pseudoalcaligenes* (EP 218 272), *P. cepacia* (EP 331 376), *P. stutzeri* (GB 1,372,034), *P. fluorescens, Pseudomonas* sp. strain SD 705 (WO 95/06720 and WO 96/27002), *P. wisconsinensis*

(WO 96/12012), a *Bacillus* lipase, e.g. from *B. subtilis* (Dartois et al. (1993), Biochemica et Biophysica Acta, 1131, 253-360), *B. stearothermophilus* (JP 64/744992) or *B. pumilus* (WO 91/16422).

Other examples are lipase variants such as those described in WO 92/05249, WO 94/01541, EP 407 225, EP 260 105, WO 95/35381, WO 96/00292, WO 95/30744, WO 94/25578, WO 95/14783, WO 95/22615, WO 97/04079 and WO 97/07202, WO 00/60063.

Preferred commercially available lipase enzymes include Lipolase™ and Lipolase Ultra™, Lipex™ and lipoclean ™ (Novozymes A/S).

Preferred phospholipases are classified as EC 3.1.1.4 and/or EC 3.1.1.32. As used herein, the term phospholipase is an enzyme which has activity towards phospholipids.

Phospholipids, such as lecithin or phosphatidylcholine, consist of glycerol esterified with two fatty acids in an outer (sn-1) and the middle (sn-2) positions and esterified with phosphoric acid in the third position; the phosphoric acid, in turn, may be esterified to an amino-alcohol. Phospholipases are enzymes which participate in the hydrolysis of phospholipids. Several types of phospholipase activity can be distinguished, including phospholipases $A_1$ and $A_2$ which hydrolyze one fatty acyl group (in the sn-1 and sn-2 position, respectively) to form lysophospholipid; and lysophospholipase (or phospholipase B) which can hydrolyze the remaining fatty acyl group in lysophospholipid. Phospholipase C and phospholipase D (phosphodiesterases) release diacyl glycerol or phosphatidic acid respectively.

Enzyme and photobleach may show some interaction and should be chosen such that this interaction is not negative. Some negative interactions may be avoided by encapsulation of one or other of enzyme or photobleach and/or other segregation within the product.

Suitable proteases include those of animal, vegetable or microbial origin. Microbial origin is preferred. Chemically modified or protein engineered mutants are included. The protease may be a serine protease or a metallo protease, preferably an alkaline microbial protease or a trypsin-like protease. Preferred commercially available protease enzymes include Alcalase™, Savinase™, Primase™, Duralase™, Dyrazym™, Esperase™, Everlase™, Polarzyme™, and Kannase™, (Novozymes A/S), Maxatase™, Maxacal™, Maxapem™, Properase™, Purafect™, Purafect OxP™, FN2™, and FN3™ (Genencor International Inc.).

Preferred cutinases are classified in EC 3.1.1.74. The cutinase may be of any origin. Preferably cutinases are of microbial origin, in particular of bacterial, of fungal or of yeast origin.

Suitable amylases (alpha and/or beta) include those of bacterial or fungal origin. Chemically modified or protein engineered mutants are included. Amylases include, for example, alpha-amylases obtained from *Bacillus,* e.g. a special strain of *B. licheniformis,* described in more detail in GB 1,296,839, or the *Bacillus* sp. strains disclosed in WO 95/026397 or WO 00/060060. Commercially available amylases are Duramyl™, Termamyl™, Termamyl Ultra™, Natalase™, Stainzyme™, Fungamyl™ and BAN™ (Novozymes A/S), Rapidase™ and Purastar™ (from Genencor International Inc.).

Suitable cellulases include those of bacterial or fungal origin. Chemically modified or protein engineered mutants are included. Suitable cellulases include cellulases from the genera *Bacillus, Pseudomonas, Humicola, Fusarium, Thielavia, Acremonium,* e.g. the fungal cellulases produced from *Humicola insolens, Thielavia terrestris, Myceliophthora thermophila,* and *Fusarium oxysporum* disclosed in US 4,435,307, US 5,648,263, US 5,691,178, US 5,776,757, WO 89/09259, WO 96/029397, and WO 98/012307. Commercially available cellulases include Celluzyme™, Carezyme™, Celluclean ™, Endolase™, Renozyme™ (Novozymes A/S), Clazinase™ and Puradax HA™ (Genencor International Inc.), and KAC-500(B)™ (Kao Corporation).

Suitable peroxidases/oxidases include those of plant, bacterial or fungal origin. Chemically modified or protein engineered mutants are included. Examples of useful peroxidases include peroxidases from *Coprinus,* e.g. from *C. cinereus,* and variants thereof as those described in WO 93/24618, WO 95/10602, and WO 98/15257. Commercially available peroxidases include Guardzyme™ and Novozym™ 51004 (Novozymes A/S).

Further enzymes suitable for use are discussed in WO2009/087524, WO2009/090576, WO2009/107091, WO2009/111258 and WO2009/148983.

Preferred enzymes are proteases, lipases, amylase and cellulases, most advantageously a serine protease is comprised by the laundry detergent composition of the invention.

## Enzyme Stabilizers

Any enzyme present in the composition may be stabilized using conventional stabilizing agents, e.g., a polyol such as propylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in e.g. WO 92/19709 and WO 92/19708.

Where alkyl groups are sufficiently long to form branched or cyclic chains, the alkyl groups encompass branched, cyclic and linear alkyl chains. The alkyl groups are preferably linear or branched, most preferably linear.

## Form of the laundry detergent composition

The laundry detergent composition of the invention may be a liquid or powder, but preferably is a powder.
Advantageously to avoid coloring the powder as a whole by the shading dye, the shading dye of the invention (i.e. the poly-alkoxylated blue or violet bis-azo dye comprising at least one polyalkoxy group which is end-terminated by a -COOH group), and preferably all the shading dyes, if more are present, is present in post-dosed granules containing less than 5 wt. % of the shading dye. It was found that limiting the amount of shading dye of the invention in the post-dose dye granules to at most 5 wt. % reduces spotting upon neat application of the product (e.g. as powder on wet textile). Preferably a further non-shading dye is added to the post-dose granule to give the granule a blue colour.
Preferably the total amount of shading dye comprised by the post-dose dye granule is from 0.1 to 2 wt. %, based on the total weight of the post-dose dye granule.
The shading dye may be pre-mixed with a water-soluble salt (such as sodium sulfate) to form a post-dose dye granule. The post-dose dye granules can be made by known techniques in the art, such as granulation, fluid-bed agglomeration and the like. The post-dose dye granules of the invention can be subsequently mixed with the based detergent granules.
The size of the post-dose dye granule may be in the range of 50 to 3000 μm. It is most preferred that the granule has a particle size in the range of 100 to 2000 μm, most preferably 180 μm to 1000 μm. The size as given is the maximum length in any one direction of the granule such that the granule passes through a standard sieve of the requisite size.
As powder laundry detergent composition, the composition preferably comprises a combination of linear alkyl benzene sulfonates, carbonate and sodium sulfate and post-dosed dye granules, wherein the post-dose dye granules comprise the poly-alkoxylated blue or violet bis-azo dye according to the invention.
Unless otherwise indicated, preferred aspects in the context of the one aspect of the invention (e.g. the laundry detergent composition) are also applicable as preferred aspects in the context of one of the other aspects, such as the wash-liquor of the domestic method of treating a textile or the bis-azo dye of the invention *mutatis mutandis.* For example, the bis-azo dye of structure (IV) is the most preferred shading dye according to the invention for use in the laundry detergent composition of the invention, to be used in the wash liquor of the domestic method of treating a textile and the most preferred bis-azo dye of the invention.
The invention is now illustrated by the following non-limiting examples.

## Examples

Post-dose dye granules containing shading dye are made according to the following procedure: The shading dye granule is made by dissolving shading dye in COCO 7EO nonionic surfactant to give 1 wt. % of the dye concentration. The dye/NI solution (2.5 g) is added to 10 g bentonite clay powder and mixed thoroughly. At this level the mixture will be still a free-flowing powder. The resultant powder is granulated with 3g of a 40 wt. % solution of Sokalan CP5 polymer solution. The resultant post-dose dye granules are dried in an oven at 80 degrees Celsius and finally sieved to give granules in the range of 180 to 1000 microns. The post-dose dye granules are separately added to a base detergent powder and thoroughly mixed to give a powder with a final dye level of 0.004 wt. %.
The base detergent powder is of the following formulation:

| **Ingredient** | **Weight%** |
|---|---|
| Linear alkyl benzene sulfonate | 14.5 |
| Sodium carbonate | 20.0 |
| Sodium sulfate | 50.0 |
| Sodium silicate | 6.0 |
| zeolite | 2.5 |
| Salt speckle granules (blue and red) | 1.8 |
| perfume | 0.3 |
| Sodium carboxymethylcellulose | 0.1 |
| Sokalan CP5 (ex BASF) | 0.1 |
| Minors (including fluorescer) | < 0.1 |
| Water | To balance |

In an example according to the invention the shading dye is according to the structure (IV) with n = 6 (i.e. Example 1). As comparative (not according to the invention) a shading dye is taken of the same structure but wherein the -COOH is replaced by -H (i.e. Comparative A).

Experimental Method

A wash liquor is prepared by dosing 4g/L of laundry detergent powder into 13°FH water in tergotometer pots and a 10 by 10 cm piece of woven cotton, knitted cotton, 65/35 polycotton, microfiber polyester or 80/20 nylon-elastene textile is added so that the wash liquor to textile ratio is 100:1. The wash solution is agitated at 200 rpm for 1 hour at room temperature, the textile rinsed in 13°FH water and dried.

The laundry detergent powder is according to Example 1, Comparative A, or does not contain any shading dye (reference).

The colour of the textile is measured using a reflectometer and expressed as CIE L*a*b*. The colour change of the textile washed using either the laundry detergent powder according to Example 1 or according to Comparative A is expressed relative to that of the textile washed using the reference powder. The following expression is used: $\Delta b$ = b(reference) - b(dye). The relative deposition of the dye according to Example 1 or according to Comparative A can thus be compared.

## Claims

**1.** A laundry detergent composition comprising:

(i) from 2 to 70 wt. % of a surfactant; and
(ii) from 0.00001 to 0.1 wt. % of a poly-alkoxylated blue or violet bis-azo dye wherein the polyalkoxylated blue or violet bis-azo dye is an ethoxylated dye comprising at least one polyalkoxy group which is end-terminated by a -COOH group, wherein the dye is of the form:

$$BAC\ \text{-}O\text{-}(CH_2CH_2O)_nCH_2COOH$$

wherein BAC comprises the bis-azo chromophore structure and n is from 2 to 20, more preferably from 3 to 10, even more preferably from 4 to 8; and wherein the poly-alkoxylated blue or violet bis-azo dye comprises the following general structure (I):

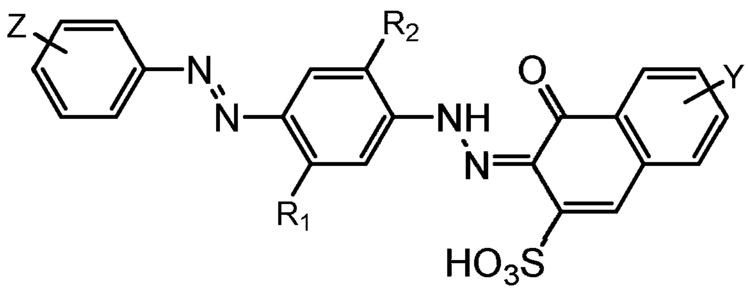

wherein:

$R_1$ and $R_2$ are independently H, alkyl, alkoxy, alkyleneoxy, alkyl capped alkyleneoxy, polyalkyleneoxy, alkyl capped polyalkyleneoxy, urea, amido or acetamido;
Z is an oxygen, nitrogen or sulfonamido group further substituted with a substituted or unsubstituted amino, or a substituted or unsubstituted sulfonamido group, wherein the substituents are selected from the group consisting of alkyl, alkyleneoxy, polyalkyleneoxy, or phenyl moieties wherein the phenyl group may be further substituted with alkyl, alkyleneoxy or polyalkyleneoxy moieties;
Y is a substituted or unsubstituted amino group.

**2.** A laundry detergent composition according to claim 1, wherein the at least one polyalkoxy group which is end-terminated by a -COOH is part of the Z-substituent.

**3.** A laundry detergent composition according to claim 1 or claim 2, wherein the BAC comprises the following general

structure (II):

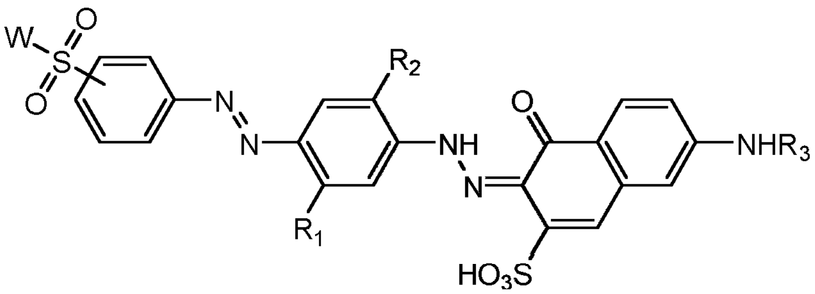

wherein:

$R_1$ and $R_2$ are independently alkyl or alkoxy, preferably methyl and methoxy;
W is a substituent amino moiety;
$R_3$ is a hydrogen, alkyl or aryl group, preferably a phenyl group.

**4.** A laundry detergent composition according to claim 3, wherein the at least one polyalkoxy group which is end-terminated by a -COOH is part of the W-substituent.

**5.** A laundry detergent composition according to any preceding claim, wherein the poly-alkoxylated blue or violet bis-azo dye is of one the following structures:

(III)

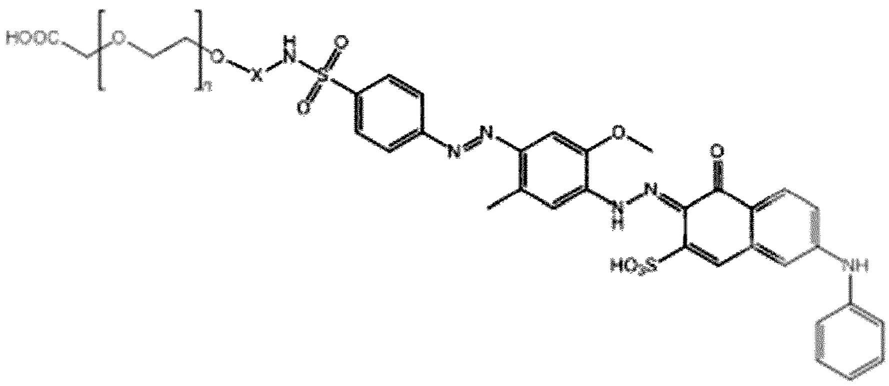

wherein X is an alkyl group or a mono or poly propoxy group;
and wherein n is from 2 to 20;

(IV)

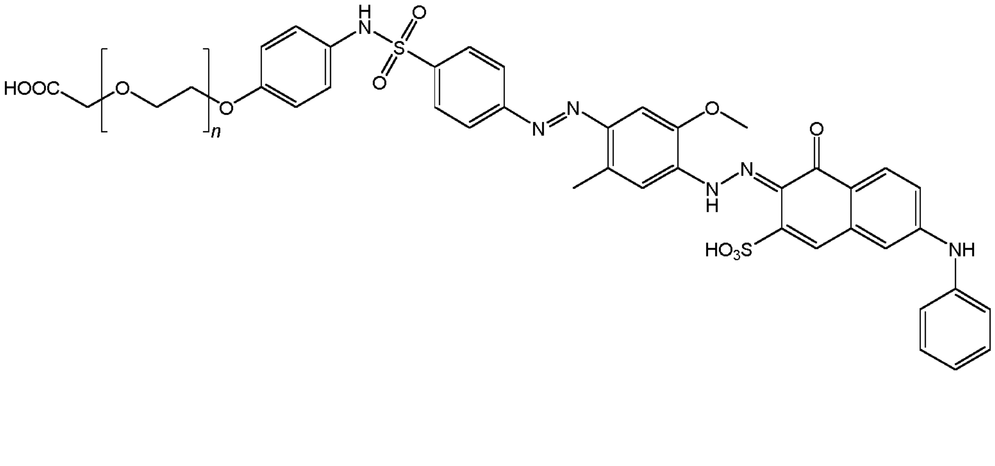

wherein n is from 2 to 20;

(V)

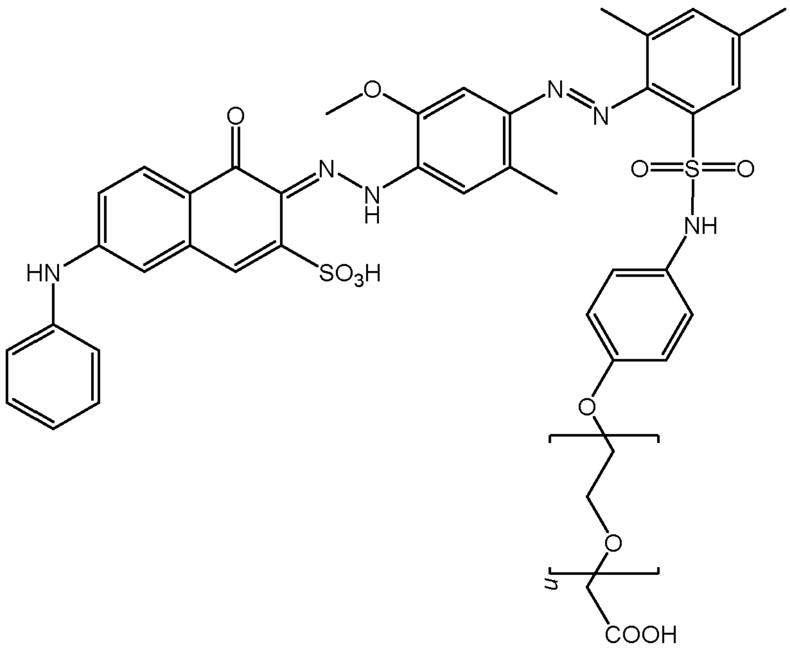

wherein n is from 2 to 20.

6. A laundry detergent composition according to claim 5, wherein the poly-alkoxylated blue or violet bis-azo dye is of the following structure (IV):

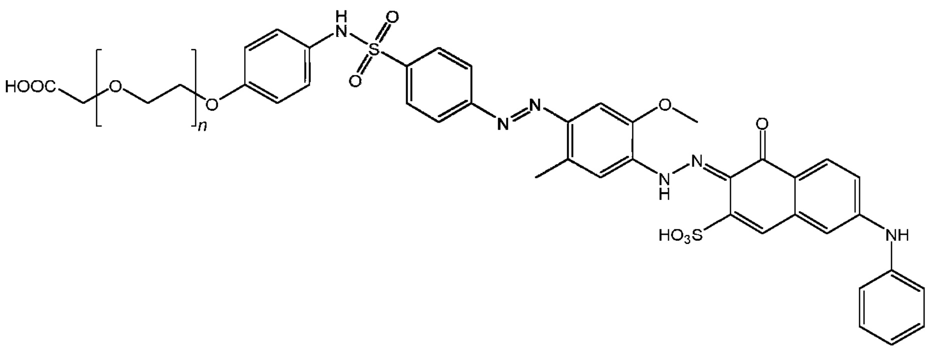

wherein n is from 2 to 20.

7. A laundry detergent composition according to any preceding claim, wherein the at least one polyalkoxy group is a linear polyalkoxy group which is end-terminated by a $-OCH_2COOH$ group.

8. A laundry detergent composition according to any preceding claim, wherein the laundry detergent composition is a powder.

9. A laundry detergent composition according to any preceding claim, wherein the poly-alkoxylated blue or violet bis-azo dye comprising at least one polyalkoxy group which is end-terminated by a $-OCH_2COOH$ group, is present in post-dosed dye-granules.

10. A laundry detergent composition according to claim 9, wherein the amount of poly-alkoxylated blue or violet bis-azo dye comprising at least one polyalkoxy group which is end-terminated by a $-OCH_2COOH$ group, in the post-dosed dye-granules is at most 5 wt. %.

**11.** A laundry detergent composition according to any preceding claim, wherein the amount of surfactant is from 10 to 30 wt. %.

**12.** A domestic method of treating a textile, the method comprising the steps of:

a. treating a textile with an aqueous solution of 0.5 to 20 g/L, more preferably 1 to 10 g/L of the laundry detergent composition according to any of the preceding claims;
b. preferably rinsing and drying the textile.

**13.** A poly-alkoxylated blue or violet bis-azo dye according to any one of claims 1 to 11, wherein the dye preferably is of the following structure (IV):

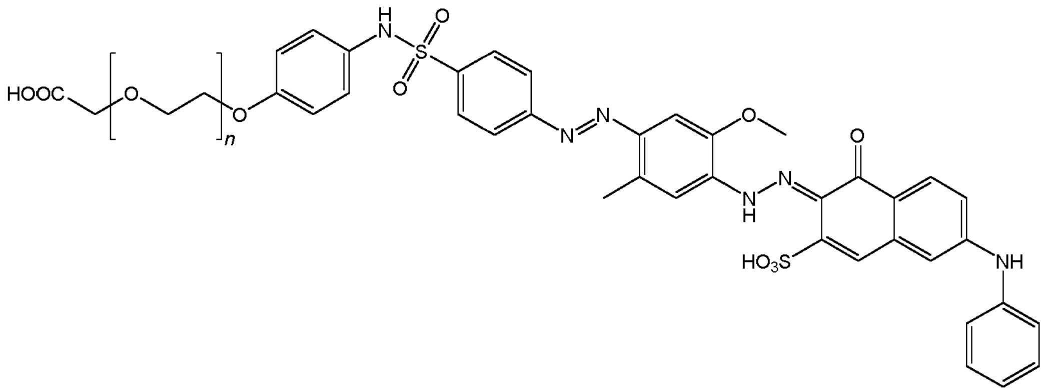

wherein n is from 2 to 20.

## Patentansprüche

**1.** Waschmittelzusammensetzung, umfassend:

(i) 2 bis 70 Gew.-% eines Tensids; und
(ii) 0,00001 bis 0,1 Gew.-% eines polyalkoxylierten blauen oder violetten Bisazofarbstoffs, wobei der polyalkoxylierte blaue oder violette Bisazofarbstoff ein ethoxylierter Farbstoff ist, der mindestens eine Polyalkoxygruppe umfasst, die durch eine -COOH-Gruppe endterminiert ist, wobei der Farbstoff in der Form von

$$BAC\text{-}O\text{-}(CH_2CH_2O)_nCH_2COOH$$

vorliegt,
wobei BAC die Bisazochromophorstruktur umfasst und n zwischen 2 und 20, bevorzugter zwischen 3 und 10, noch bevorzugter zwischen 4 und 8 liegt; und wobei der polyalkoxylierte blaue oder violette Bisazofarbstoff die folgende allgemeine Struktur (I) umfasst:

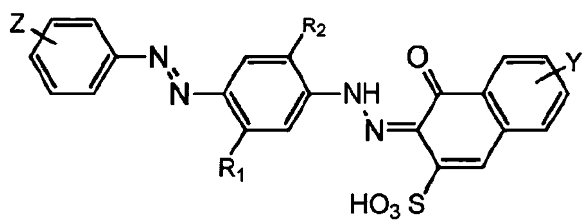

,

wobei:

$R_1$ und $R_2$ unabhängig voneinander H, Alkyl, Alkoxy, Alkylenoxy, alkylterminiertes Alkylenoxy, Polyalkylenoxy, alkylterminiertes Polyalkylenoxy, Harnstoff, Amido oder Acetamido sind;
Z eine Sauerstoff-, Stickstoff- oder Sulfonamidogruppe ist, die zusätzlich mit einer substituierten oder

unsubstituierten Amino- oder einer substituierten oder unsubstituierten Sulfonamidogruppe substituiert ist, wobei die Substituenten aus der Gruppe ausgewählt sind, die aus Alkyl-, Alkylenoxy-, Polyalkylenoxy- oder Phenylresten besteht, wobei die Phenylgruppe ferner mit Alkyl-, Alkylenoxy- oder Polyalkylenoxyresten substituiert sein kann;
Y eine substituierte oder unsubstituierte Aminogruppe ist.

2. Waschmittelzusammensetzung nach Anspruch 1, wobei die mindestens eine Polyalkoxygruppe, die durch eine -COOH-Gruppe endterminiert ist, Teil des Z-Substituenten ist.

3. Waschmittelzusammensetzung nach Anspruch 1 oder Anspruch 2, wobei der BAC-Rest die folgende allgemeine Struktur (II) umfasst:

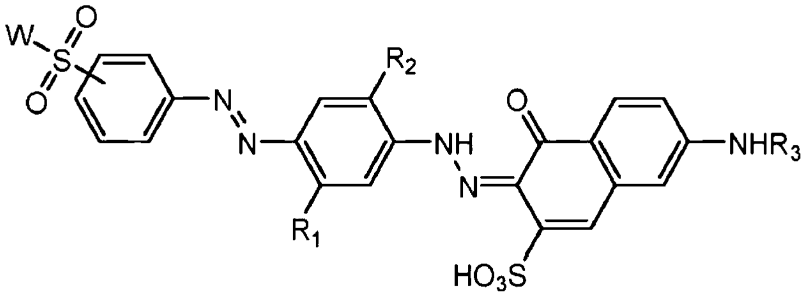

,

wobei:

$R_1$ und $R_2$ unabhängig voneinander Alkyl oder Alkoxy, vorzugsweise Methyl und Methoxy sind;
W ein Aminorest-Substituent ist;
$R_3$ Wasserstoff, eine Alkyl- oder Arylgruppe, vorzugsweise eine Phenylgruppe ist.

4. Waschmittelzusammensetzung nach Anspruch 3, wobei die mindestens eine Polyalkoxygruppe, die durch eine -COOH-Gruppe endterminiert ist, Teil des W-Substituenten ist.

5. Waschmittelzusammensetzung nach einem vorhergehenden Anspruch, wobei der polyalkoxylierte blaue oder violette Bisazofarbstoff eine der folgenden Strukturen aufweist:

(III)

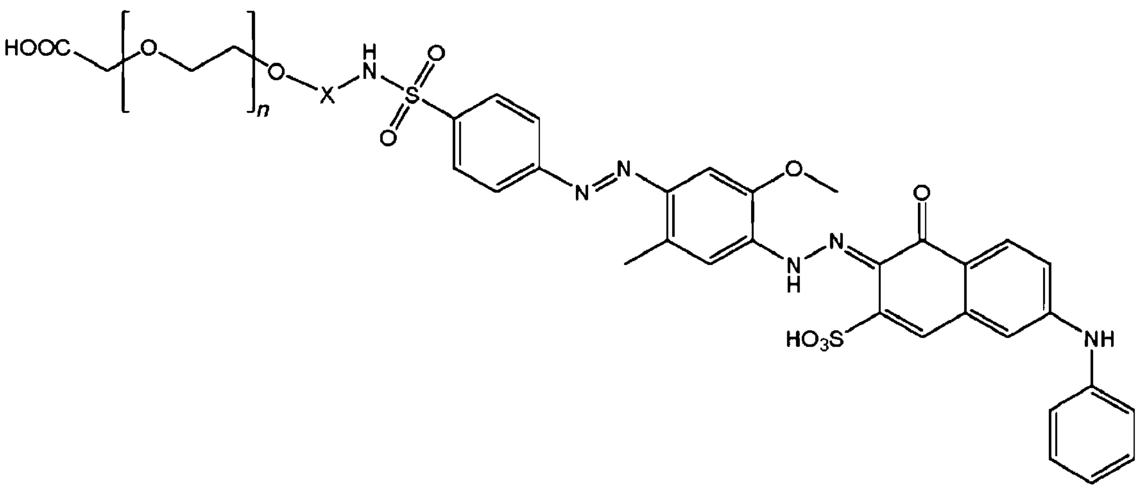

,

wobei X eine Alkylgruppe oder eine Mono- oder Polypropoxygruppe ist; und
wobei n zwischen 2 und 20 liegt;

(IV)

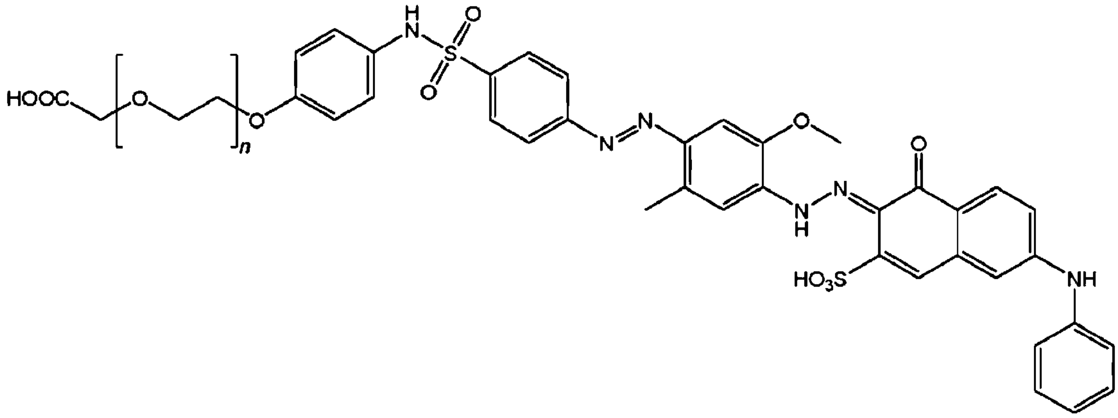

,

wobei n zwischen 2 und 20 liegt;

(V)

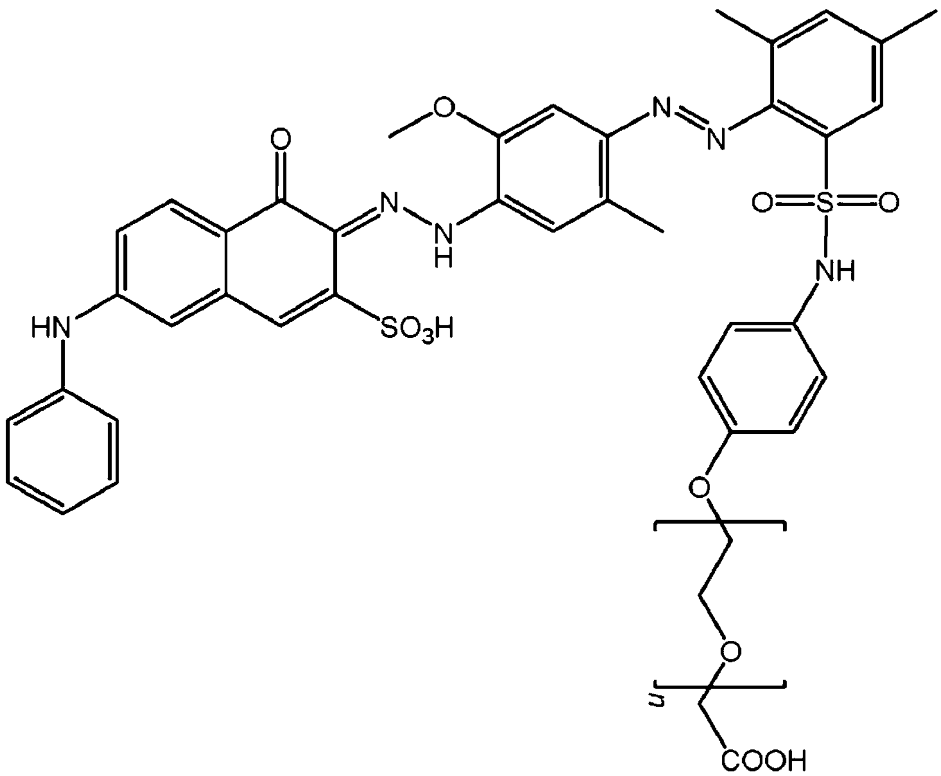

,

wobei n zwischen 2 und 20 liegt.

**6.** Waschmittelzusammensetzung nach Anspruch 5, wobei der polyalkoxylierte blaue oder violette Bisazofarbstoff die folgende Struktur (IV) aufweist:

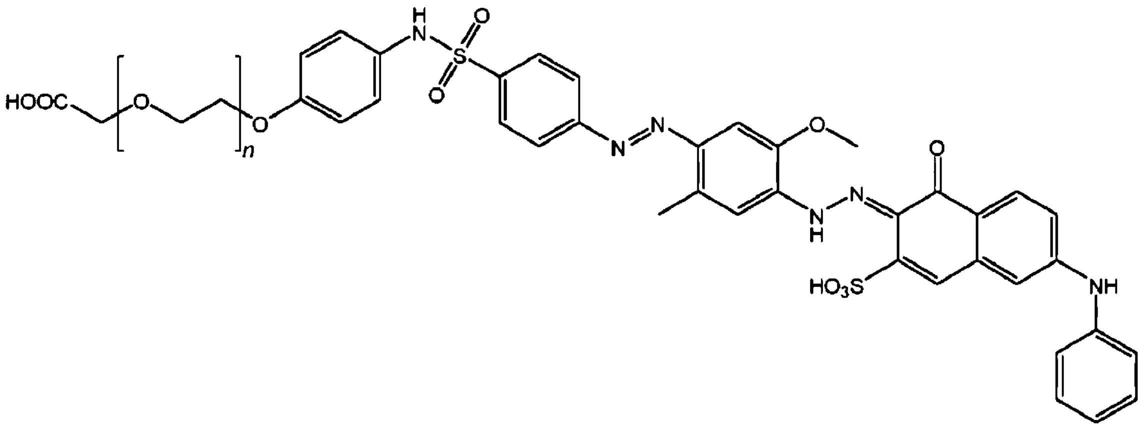

,

wobei n zwischen 2 und 20 liegt.

7. Waschmittelzusammensetzung nach einem vorhergehenden Anspruch, wobei die mindestens eine Polyalkoxygruppe eine lineare Polyalkoxygruppe ist, die durch eine $-OCH_2COOH$-Gruppe endterminiert ist.

8. Waschmittelzusammensetzung nach einem vorhergehenden Anspruch, wobei die Waschmittelzusammensetzung ein Pulver ist.

9. Waschmittelzusammensetzung nach einem vorhergehenden Anspruch, wobei der polyalkoxylierte blaue oder violette Bisazofarbstoff, der mindestens eine Polyalkoxygruppe umfasst, die durch eine $-OCH_2COOH$-Gruppe endterminiert ist, als nachdosierte Farbstoffgranulate vorliegen.

10. Waschmittelzusammensetzung nach Anspruch 9, wobei die Menge an polyalkoxyliertem blauem oder violettem Bisazofarbstoff, der mindestens eine Polyalkoxygruppe umfasst, die durch eine $-OCH_2COOH$-Gruppe endterminiert ist, in den nachdosierten Farbstoffgranulaten höchstens 5 Gew.-% beträgt.

11. Waschmittelzusammensetzung nach einem vorhergehenden Anspruch, wobei die Menge an Tensid 10 bis 30 Gew.-% beträgt.

12. Häusliches Verfahren zur Behandlung eines Textils, wobei das Verfahren die folgenden Schritte umfasst:

a. Behandeln eines Textils mit einer wässrigen Lösung von 0,5 bis 20 g/l, bevorzugter 1 bis 10 g/l der Waschmittelzusammensetzung nach einem der vorhergehenden Ansprüche;
b. vorzugsweise Spülen und Trocknen des Textils.

13. Polyalkoxylierter blauer oder violetter Bisazofarbstoff nach irgendeinem der Ansprüche 1 bis 11, wobei der Farbstoff vorzugsweise die folgende Struktur (IV) aufweist:

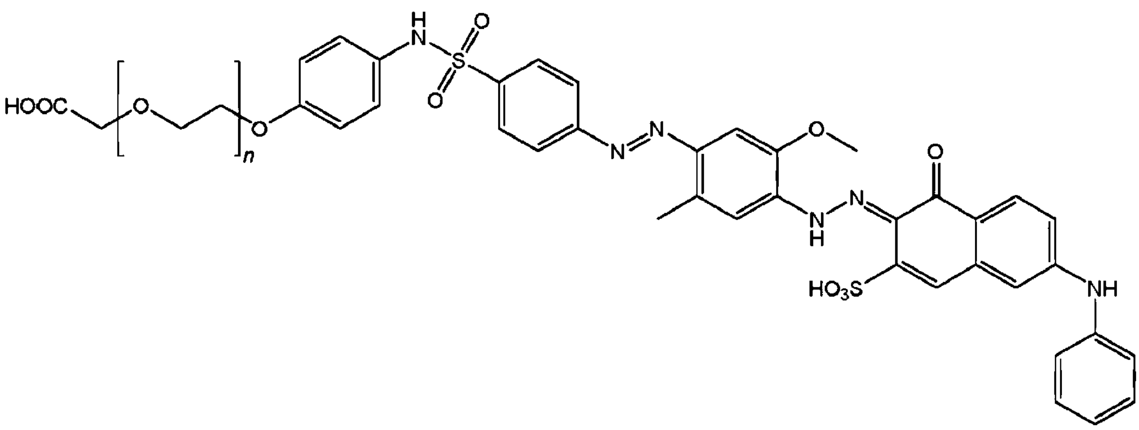

,

wobei n zwischen 2 und 20 liegt.

## Revendications

**1.** Composition de lessive comprenant :

(i) de 2 à 70 % en poids d'un tensioactif ; et
(ii) de 0,00001 à 0,1 % en poids d'un colorant bis-azoïque bleu ou violet polyalcoxylé, dans laquelle le colorant bis-azoïque bleu ou violet polyalcoxylé est un colorant éthoxylé comprenant au moins un groupe polyalcoxy qui est terminé par un groupe -COOH, dans laquelle le colorant est de la forme :

$$BAC\ \text{-}O\text{-}(CH_2CH_2O)_nCH_2COOH$$

dans laquelle BAC comprend la structure de chromophore bis-azo et n est de 2 à 20, plus préférablement de 3 à 10, encore plus préférablement de 4 à 8 ; et dans laquelle le colorant bis-azoïque bleu ou violet polyalcoxylé comprend la formule générale (I) suivante :

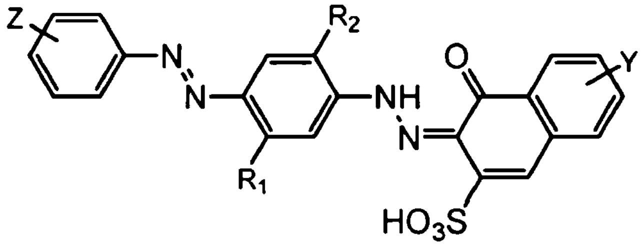

dans laquelle :

$R_1$ et $R_2$ sont indépendamment H, alkyle, alcoxy, alkylèneoxy, alkylèneoxy à terminaison alkyle, polyalkylèneoxy, polyalkylèneoxy à terminaison alkyle, urée, amido ou acétamido ;
Z est un groupe oxygène, azote ou sulfonamido substitué en outre par un groupe amino substitué ou non substitué, ou un groupe sulfonamido substitué ou non substitué, dans laquelle les substituants sont choisis dans le groupe consistant en les fractions alkyle, alkylèneoxy, polyalkylèneoxy ou phényle, dans laquelle le groupe phényle peut en outre être substitué par des fractions alkyle, alkylèneoxy ou polyalkylèneoxy ;
Y et un groupe amino substitué ou non substitué.

**2.** Composition de lessive selon la revendication 1, dans laquelle l'au moins un groupe polyalcoxy qui est terminé par un -COOH, fait partie du substituant Z.

**3.** Composition de lessive selon la revendication 1 ou la revendication 2, dans laquelle le BAC comprend la structure générale (II) suivante :

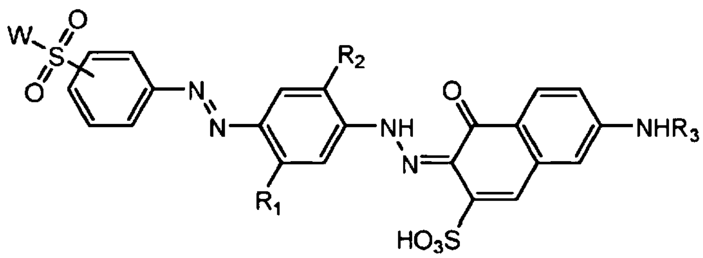

dans laquelle :

$R_1$ et $R_2$ sont indépendamment alkyle ou alcoxy, de préférence méthyle et méthoxy ;
W est une fraction amino substituante ;
R3 est un atome d'hydrogène, un groupe alkyle ou aryle, de préférence un groupe phényle.

4. Composition de lessive selon la revendication 3, dans laquelle l'au moins un groupe polyalcoxy qui est terminé par un -COOH fait partie du substituant W.

5. Composition de lessive selon l'une quelconque des revendications précédentes, dans laquelle le colorant bis-azoïque bleu ou violet polyacoxylé est de l'une des structures suivantes :

(III)

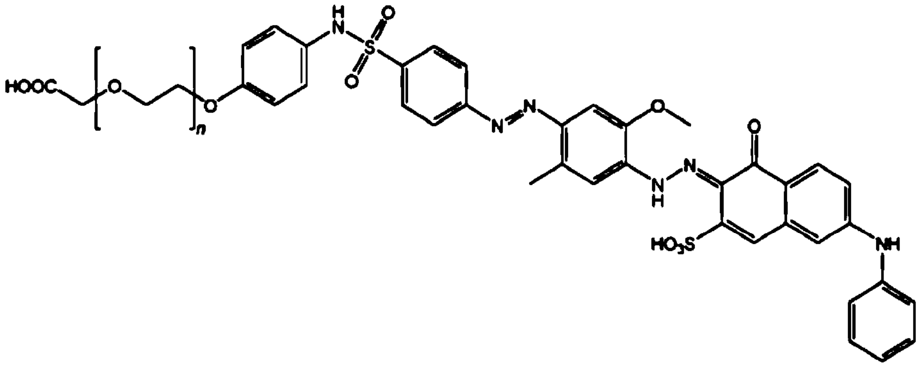

dans laquelle X est un groupe alkyle ou un groupe mono ou polypropoxy et dans laquelle n est de 2 à 20 ;

(IV)

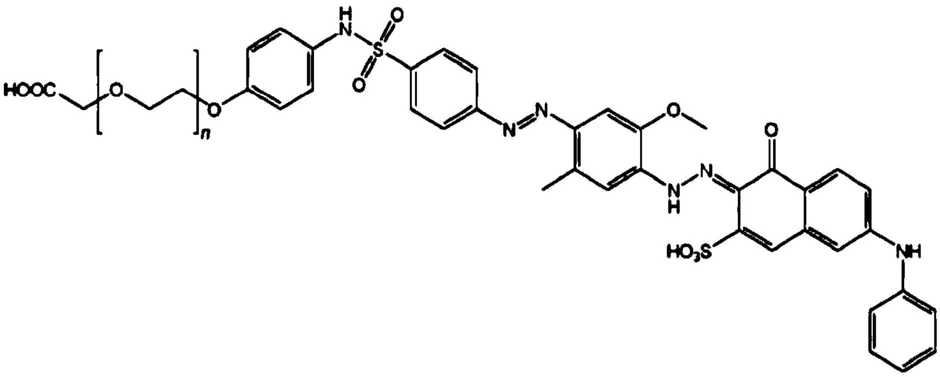

dans laquelle n est de 2 à 20 ;

(V)

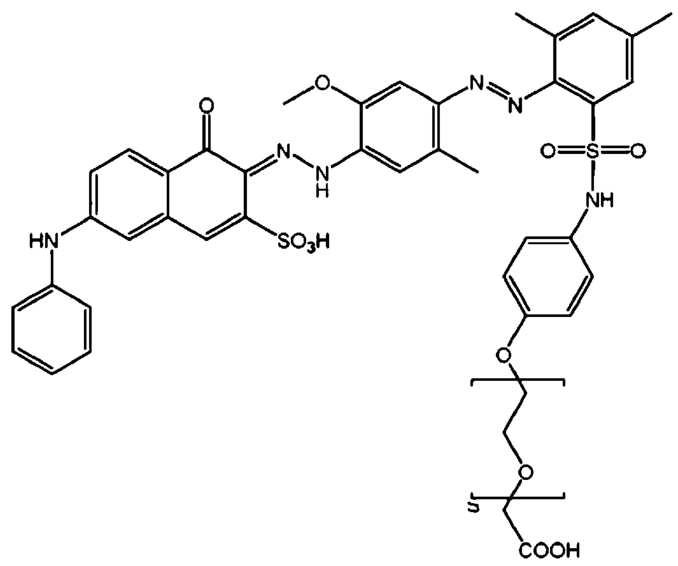

dans laquelle n est de 2 à 20.

6. Composition de lessive selon la revendication 5, dans laquelle le colorant bis-azoïque bleu ou violet polyalcoxylé est de la structure (IV) suivante :

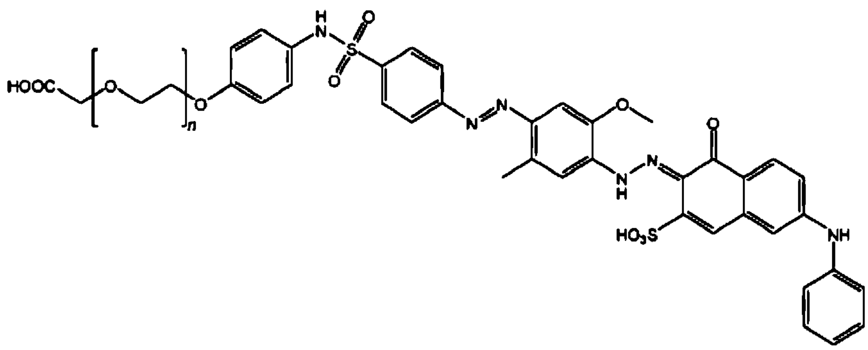

dans laquelle n est de 2 à 20.

7. Composition de lessive selon l'une quelconque des revendications précédentes, dans laquelle l'au moins un groupe polyalcoxy est un groupe polyalcoxy linéaire qui est terminé par un groupe $-OCH_2COOH$.

8. Composition de lessive selon l'une quelconque des revendications précédentes, dans laquelle la composition de lessive est une poudre.

9. Composition de lessive selon l'une quelconque des revendications précédentes, dans laquelle le colorant bis-azoïque bleu ou violet polyalcoxylé, comprenant au moins un groupe polyalcoxy qui est terminé par un groupe $-OCH_2COOH$, est présent dans des granulés de colorant post-dosés.

10. Composition de lessive selon la revendication 9, dans laquelle la quantité de colorant bis-azoïque bleu ou violet polyalcoxylé comprenant au moins un groupe polyalcoxy qui est terminé par un groupe $-OCH_2COOH$, dans les granulés de colorant post-dosés est au plus de 5 % en poids.

11. Composition de lessive selon l'une quelconque des revendications précédentes, dans laquelle la quantité de tensioactif est de 10 à 30 % en poids.

12. Procédé domestique de traitement d'un textile, le procédé comprenant les étapes suivantes :

a. le traitement d'un textile avec une solution aqueuse de 0,5 à 20 g/L, de préférence de 1 à 10 g/L de la

composition de lessive selon l'une quelconque des revendications précédentes ;
b. de préférence, le rinçage et le séchage du textile.

**13.** Colorant bis-azoïque bleu ou violet polyalcoxylé selon l'une quelconque des revendications 1 à 11, dans lequel le colorant est de préférence de la formule (IV) suivante :

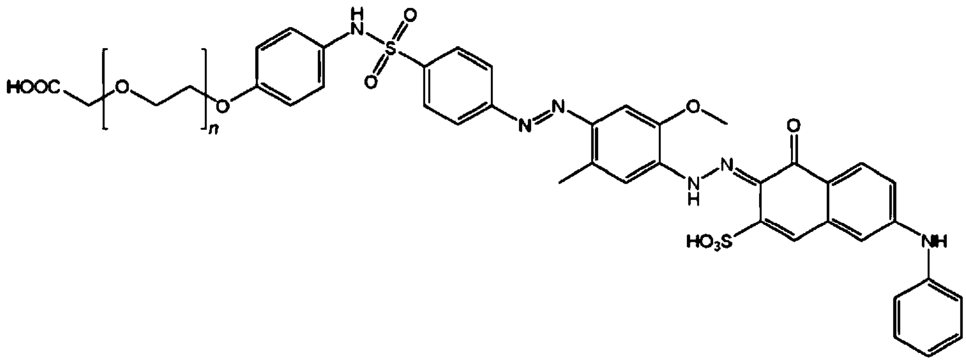

dans laquelle n est de 2 à 20.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011098356 A
- WO 2012054835 A
- EP 2992054 A
- WO 2013169828 A
- WO 2013169536 A
- WO 2012054058 A
- EP 328177 A
- EP 070074 A
- EP 346995 A
- EP 0384070 A
- EP 258068 A
- EP 305216 A
- WO 9613580 A
- EP 218272 A
- EP 331376 A
- GB 1372034 A
- WO 9506720 A
- WO 9627002 A
- WO 9612012 A
- JP 64744992 B
- WO 9116422 A
- WO 9205249 A
- WO 9401541 A
- EP 407225 A
- EP 260105 A
- WO 9535381 A
- WO 9600292 A
- WO 9530744 A
- WO 9425578 A
- WO 9514783 A
- WO 9522615 A
- WO 9704079 A
- WO 9707202 A
- WO 0060063 A
- GB 1296839 A
- WO 95026397 A
- WO 00060060 A
- US 4435307 A
- US 5648263 A
- US 5691178 A
- US 5776757 A
- WO 8909259 A
- WO 96029397 A
- WO 98012307 A
- WO 9324618 A
- WO 9510602 A
- WO 9815257 A
- WO 2009087524 A
- WO 2009090576 A
- WO 2009107091 A
- WO 2009111258 A
- WO 2009148983 A
- WO 9219709 A
- WO 9219708 A


### Non-patent literature cited in the description


- **SCHWARTZ** ; **PERRY**. Surface Active Agents. Interscience, 1949, vol. 1
- **SCHWARTZ** ; **PERRY** ; **BERCH**. Surface Active Agents. Interscience, 1958, vol. 2
- McCutcheon's Emulsifiers and Detergents. Manufacturing Confectioners Company
- **H. STACHE**. Tenside-Taschenbuch. Carl Hauser Verlag, 1981
- International Buyers Guide. Cosmetic, Toiletry and Fragrance Association. CFTA Publications, 1992
- Chemicals Buyers Directory 80th Annual Edition. OPD. Schnell Publishing Co, 1993
- *Journal of the Society of Cosmetic Chemists*, 1955, vol. 6 (2), 80
- **DARTOIS et al.** *Biochemica et Biophysica Acta*, 1993, vol. 1131, 253-360